# EUROPÄISCHE PATENTSCHRIFT

(11) **EP 3 268 264 B1**
(45) Veröffentlichungstag und Bekanntmachung des Hinweises auf die Patenterteilung: **02.01.2019**
(21) Anmeldenummer: 16702078.3
(22) Anmeldetag: 28.01.2016
(51) Int. Cl.: B62D 15/02, G05D 1/00

(54) **VERFAHREN UND VORRICHTUNG ZUM ERZEUGEN EINER ZUGRIFFSMÖGLICHKEIT AUF EINEN FAHRZEUGINNENRAUM**
METHOD AND DEVICE FOR CREATING AN ACCESS POSSIBILTY TO A VEHICLE INTERIOR
PRCÉDÉ ET DISPOSITIF POUR CRÉER UNE POSSIBILITÉ D'ACCÈS À L'INTÉRIEUR D'UN VÉHICULE

(30) Priorität: 11.03.2015 DE 102015204361
(43) Veröffentlichungstag der Anmeldung: 17.01.2018
(73) Patentinhaber: Robert Bosch GmbH, 70442 Stuttgart (DE)
(72) Erfinder: MAYER, Philipp, 70176 Stuttgart (DE); NORDBRUCH, Stefan, 70806 Kornwestheim (DE)
(86) Internationale Anmeldenummer: PCT/EP2016/051750
(87) Internationale Veröffentlichungsnummer: WO 2016/142097

(56) Entgegenhaltungen:
- EP-A2- 2 617 627
- WO-A2-2013/053776
- DE-A1-102004 027 869

## Beschreibung

Die Erfindung betrifft ein Verfahren und eine Vorrichtung zum Erzeugen einer Zugriffsmöglichkeit auf einen Fahrzeuginnenraum eines auf einer Parkposition abgestellten Fahrzeugs. Die Erfindung betrifft ferner ein Parksystem für Fahrzeuge sowie ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition. DE 10 2004 027869 A1 offenbart ein Verfahren zum Erzeugen einer Zugriffsmöglichkeit auf einen Fahrzeuginnenraum eines auf einer Parkposition abgestellten Fahrzeugs, umfassend die folgenden Schritte: Empfangen eines Zugriffswunschs für einen Zugriff auf den Fahrzeuginnenraum über ein Kommunikationsnetzwerk; ansprechend auf den empfangenen Zugriffswunsch Ermitteln von Ausparkdaten, basierend auf welchen das Fahrzeug zumindest teilweise seine Parkposition verlassen kann, um eine Zugriffsmöglichkeit auf den Fahrzeuginnenraum mittels eines Öffnens einer Fahrzeugscheibe und/oder einer Fahrzeugtür zu schaffen.

Bei einem vollautomatisierten (autonomen) sogenannten Valet Parking (AVP) wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Beim sogenannten autonomen Valet Parking werden also Fahrzeuge in der Regel vollautomatisch eingeparkt. Ziel beim Einparken ist es insbesondere, einen vorhandenen Parkraum sehr effizient zu nutzen. Da kein Fahrer oder Mitfahrer aussteigen muss, können die AVP-Fahrzeuge in der Regel sehr eng nebeneinander geparkt werden. Insbesondere können die Fahrzeuge so eng geparkt werden, dass ein Zugang zum Fahrzeug über die Fahrzeugtüren und/oder über den Kofferraum gegebenenfalls nicht mehr möglich ist, da diese nicht mehr ausreichend geöffnet werden können.

### Offenbarung der Erfindung

Die der Erfindung zugrunde liegende Aufgabe kann darin gesehen werden, ein effizientes Konzept bereitzustellen, welches eine Zugriffsmöglichkeit auf einen Fahrzeuginnenraum eines auf einer Parkposition abgestellten Fahrzeugs erzeugen kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Erzeugen einer Zugriffsmöglichkeit auf einen Fahrzeuginnenraum eines auf einer Parkposition abgestellten Fahrzeugs bereitgestellt, umfassend die folgenden Schritte:
- Empfangen eines Zugriffswunschs für einen Zugriff auf den Fahrzeuginnenraum über ein Kommunikationsnetzwerk,
- ansprechend auf den empfangenen Zugriffswunsch Ermitteln von Ausparkdaten, basierend auf welchen das Fahrzeug zumindest teilweise seine Parkposition verlassen kann, um eine Zugriffsmöglichkeit auf den Fahrzeuginnenraum mittels eines Öffnens einer Fahrzeugscheibe und/oder einer Fahrzeugtür zu schaffen,
- Senden der ermittelten Ausparkdaten an das Fahrzeug über das Kommunikationsnetzwerk,
- Empfangen eines Signals über das Kommunikationsnetzwerk, dass die Zugriffsmöglichkeit nicht länger benötigt wird,
- ansprechend auf das Signal Ermitteln von Einparkdaten, basierend auf welchen das Fahrzeug zurück in seine Parkposition fahren kann, und
- Senden der ermittelten Einparkdaten an das Fahrzeug über das Kommunikationsnetzwerk.

Gemäß einem weiteren Aspekt wird eine Vorrichtung zum Erzeugen einer Zugriffsmöglichkeit auf einen Fahrzeuginnenraum eines auf einer Parkposition abgestellten Fahrzeugs bereitgestellt, umfassend:
- eine Kommunikationsschnittstelle zum Empfangen eines Zugriffswunschs für einen Zugriff auf den Fahrzeuginnenraum über ein Kommunikationsnetzwerk,
- einen Prozessor zum Ermitteln von Ausparkdaten ansprechend auf den empfangenen Zugriffswunsch, basierend auf welchen das Fahrzeug zumindest teilweise seine Parkposition verlassen kann, um eine Zugriffsmöglichkeit auf den Fahrzeuginnenraum mittels eines Öffnens einer Fahrzeugscheibe und/oder einer Fahrzeugtür zu schaffen,
- wobei die Kommunikationsschnittstelle ausgebildet ist, die ermittelten Ausparkdaten an das Fahrzeug über das Kommunikationsnetzwerk zu senden,
- wobei die Kommunikationsschnittstelle ausgebildet ist, ein Signal über das Kommunikationsnetzwerk zu empfangen, dass die Zugriffsmöglichkeit nicht länger benötigt wird,
- wobei der Prozessor ausgebildet ist, ansprechend auf das empfangene Signal, Einparkdaten zu ermitteln, basierend auf welchen das Fahrzeug zurück in seine Parkposition fahren kann, und
- wobei die Kommunikationsschnittstelle ausgebildet ist, die ermittelten Einparkdaten an das Fahrzeug über das Kommunikationsnetzwerk zu senden.

Nach noch einem Aspekt wird ein Parksystem für Fahrzeuge bereitgestellt, wobei das Parksystem einen mehrere Parkpositionen aufweisenden Parkplatz sowie die erfindungsgemäße Vorrichtung umfasst.

Nach noch einem Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere und unter anderem den Gedanken, eine Zugriffsmöglichkeit auf den Fahrzeuginnenraum zu schaffen, indem das Fahrzeug zumindest teilweise ausgeparkt wird und nach einem Ende des Zugriffs wieder zurück in seine Parkposition eingeparkt wird. Das heißt also insbesondere, dass nur eine temporäre Zugriffsmöglichkeit geschaffen wird. Dadurch wird insbesondere der technische Vorteil bewirkt, dass eine Zugriffsmöglichkeit auf den Fahrzeuginnenraum effizient erzeugt werden kann. Denn so reicht häufig in der Regel ein teilweises Verlassen der Parkposition aus, um zumindest eine Fahrzeugtür zu öffnen, um hierüber einen Zugriff auf den Fahrzeuginnenraum zu ermöglichen.

Ein Fahrzeuginnenraum umfasst insbesondere einen Insassenraum und/oder insbesondere einen Kofferraum. Eine Fahrzeugtür umfasst zum Beispiel eine Fahrzeugtür für einen Zugang zum Insassenraum, also zum Beispiel: Fahrertür, Beifahrertür, Fahrzeugtür für Heckinsassen. Eine Fahrzeugtür umfasst zum Beispiel eine Kofferraumklappe und/oder eine Kofferraumtür. Eine Fahrzeugscheibe ist insbesondere eine Scheibe einer Fahrzeugtür.

Nach einer Ausführungsform verlässt das Fahrzeug basierend auf den Ausparkdaten zumindest teilweise, insbesondere vollständig, seine Parkposition. Das Fahrzeug parkt also zumindest teilweise, insbesondere vollständig aus.

In einer Ausführungsform fährt das Fahrzeug basierend auf den Einparkdaten zurück in seine Parkposition, parkt also wieder ein.

Dass das Fahrzeug seine Parkposition verlässt, kann nach einer Ausführungsform bedeuten, dass sich das Fahrzeug bis maximal zu einer vorbestimmten Distanz, zum Beispiel fünf Fahrzeuglängen, zum Beispiel 10 m, von seiner Parkposition entfernt.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Nach einer Ausführungsform ist vorgesehen, dass die Ausparkdaten und/oder die Einparkdaten einen oder mehrere Fernsteuerungsbefehle umfassen, basierend auf welchen das Fahrzeug ferngesteuert aus- und/oder eingeparkt wird. Das heißt also insbesondere, dass gemäß dieser Ausführungsform vorgesehen ist, dass das Fahrzeug ferngesteuert fährt. Das heißt also, dass das Fahrzeug ferngesteuert seine Parkposition zumindest teilweise verlässt und/oder ferngesteuert zurück in seine Parkposition fährt. Dadurch wird insbesondere der technische Vorteil bewirkt, dass das Fahrzeug selbst nicht eine autonome Ein- und Ausparkfunktionalität aufweisen muss. Das heißt also insbesondere, dass das Fahrzeug selbst nicht in der Lage sein muss, autonom ein- und/oder auszuparken. Es werden also technisch geringere Anforderungen an das Fahrzeug gestellt. Somit ist also das effiziente erfindungsgemäße Konzept auch auf Fahrzeuge anwendbar, die eine solche autonome Ein- und/oder Ausparkfunktionalität nicht aufweisen.

Gemäß einer weiteren Ausführungsform ist vorgesehen, dass die Ausparkdaten und/oder die Einparkdaten solche Daten umfassen, basierend auf welchen das Fahrzeug autonom aus und/oder einparken kann. Das heißt also insbesondere, dass nach dieser Ausführungsform vorgesehen ist, dass das Fahrzeug autonom, also selbstständig, aus- und/oder einparkt. Das heißt also insbesondere, dass das Fahrzeug autonom die Parkposition zumindest teilweise verlässt und/oder autonom zurück in die Parkposition fährt. Dadurch wird insbesondere der technische Vorteil bewirkt, dass zum Beispiel ein Betreiber eines Parkplatzes von dieser Aufgabe entlastet wird. Er muss also hierfür zum Beispiel in vorteilhafter Weise weniger Ressourcen, insbesondere technische Ressourcen, bereitstellen oder aufwenden.

Solche Daten, basierend auf welchen das Fahrzeug autonom aus- und/oder einparken kann, umfassen insbesondere Kartendaten einer digitalen Karte. Insbesondere umfassen solche Daten Trajektoriendaten einer Trajektorie, die das Fahrzeug für ein Ein- und/oder Ausparken abfahren soll.

Nach einer Ausführungsform kann eine Kombination der vorstehend genannten beiden Ausführungsformen betreffend das ferngesteuerte und das autonome Fahren des Fahrzeugs vorgesehen sein. Das heißt also insbesondere, dass das Fahrzeug bei seinem Verlassen und/oder bei seinem Zurückfahren in die Parkposition teilweise ferngesteuert wird und teilweise autonom fährt. Dadurch wird insbesondere der technische Vorteil bewirkt, dass die Vorteile beider Ausführungsformen miteinander kombiniert werden können. So kann also in vorteilhafter Weise das Fahrzeug an solchen Stellen oder Orten unterstützt werden, an denen die autonome Fahrt sehr komplex oder schwierig durchzuführen ist.

Nach einer weiteren Ausführungsform ist vorgesehen, dass ansprechend auf den empfangenen Zugriffswunsch Positionsdaten der Parkposition über das Kommunikationsnetzwerk gesendet werden. Dadurch wird insbesondere der technische Vorteil bewirkt, dass diejenige Person, die Zugriff auf den Fahrzeuginnenraum erlangen möchte, weiß, wo sich das Fahrzeug befindet.

Autonom im Sinne der vorliegenden Erfindung bedeutet insbesondere, dass das Fahrzeug selbstständig, also ohne einen Eingriff eines Fahrers, auf einem Parkplatz navigieren oder fahren kann, insbesondere ein- und/oder ausparken kann. Das heißt also insbesondere, dass das Fahrzeug selbständig auf einem Parkplatz fahren kann respektive selbstständig ein- und/oder ausparken kann, ohne dass ein Fahrer hierfür das Fahrzeug steuern müsste. Ein solch autonom fahrendes Fahrzeug, das automatisch ein- und ausparken kann, kann beispielsweise als ein AVP-Fahrzeug bezeichnet werden. AVP steht für "Automated Valet Parking" und kann mit "automatischer Parkvorgang" übersetzt werden. Fahrzeuge, die diese AVP-Funktionalität nicht aufweisen, werden beispielsweise als normale Fahrzeuge bezeichnet.

In der Regel ist es so, dass im Rahmen eines AVP-Vorgangs, das Fahrzeug ohne einen Fahrer zu seiner Parkposition fährt. Das heißt also, dass ein Fahrer gar nicht weiß, wo sein Fahrzeug auf einem Parkplatz abgestellt wurde. Dadurch aber, dass gemäß einer Ausführungsform vorgesehen ist, dass die Position der Parkposition über das Kommunikationsnetzwerk gesendet wird, kann der Fahrer in vorteilhafter Weise Kenntnis über diese Position erlangen.

Nach einer Ausführungsform umfasst das Kommunikationsnetzwerk ein WLAN und/oder ein Mobilfunknetzwerk.

Nach einer Ausführungsform ist respektive wird eine Kommunikation über das Kommunikationsnetzwerk verschlüsselt.

In einer anderen Ausführungsform ist vorgesehen, dass die Ausparkdaten solche Daten umfassen, dass das Fahrzeug eines der folgenden Ausparkmanöver durchführen kann: Teilweises Herausfahren aus der Parkposition mit anschließendem Abstellen, Vollständiges Herausfahren aus der Parkposition mit anschließendem Abstellen, Vollständiges Herausfahren mit anschließendem Abstellen längs zu oder in einer Fahrspur.

Das heißt also insbesondere, dass das Fahrzeug eines der vorstehend genannten Ausparkmanöver autonom oder ferngesteuert oder autonom kombiniert ferngesteuert durchführt.

Das teilweise Herausfahren aus der Parkposition mit anschließendem Abstellen weist insbesondere den technischen Vorteil auf, dass ein potenzieller Fahrzeugverkehr im Umfeld der Parkposition nur gering bis gar nicht gestört wird. In der Regel reicht bereits ein teilweises Herausfahren aus der Parkposition aus, damit zumindest eine Fahrzeugtür geöffnet werden kann, um einen Zugriff auf den Fahrzeuginnenraum zu erlangen.

Das vollständige Herausfahren aus der Parkposition mit anschließendem Abstellen weist insbesondere den technischen Vorteil auf, dass ein effektiver und effizienter Zugriff auf den Fahrzeuginnenraum mittels Öffnen sämtlicher Fahrzeugtüren ermöglicht ist.

Das vollständige Herausfahren mit anschließendem Abstellen längs zu oder in einer Fahrspur weist insbesondere den technischen Vorteil auf, dass, obwohl das Fahrzeug vollständig aus der Parkposition herausgefahren wurde, es dennoch nur in einem geringen Umfang einen potenziellen Fahrzeugverkehr im Umfeld der Parkposition stört. Denn ein Abstellen längs zu oder in einer Fahrspur stört einen potenziellen Fahrzeugverkehr deutlich weniger, als wenn das Fahrzeug quer zu oder in einer Fahrspur abgestellt würde.

In einer anderen Ausführungsform ist vorgesehen, dass basierend auf einer momentanen und/oder prädizierten Verkehrslage im Umfeld der Parkposition ermittelt wird, ob zumindest eines der Ausparkmanöver durchführbar ist, wobei, wenn keines der Ausparkmanöver durchführbar ist, eine der folgenden Aktionen durchgeführt wird:
- Senden einer Nachricht an einen Absender des Zugriffswunschs, dass der Zugriffswunsch zu einem späteren Zeitpunkt noch einmal gesendet werden soll oder dass die Zugriffsmöglichkeit erst zu einem späteren Zeitpunkt geschaffen werden kann, oder
- Senden von Daten an das Fahrzeug über das Kommunikationsnetzwerk, basierend auf welchen das Fahrzeug, zu einer Zielposition fahren kann, an welcher der Zugriff durchführbar ist.

Dadurch wird insbesondere der technische Vorteil bewirkt, dass, obwohl keines der Ausparkmanöver durchführbar ist, dennoch mögliche Alternativen geschaffen sind, um Zugriff auf den Fahrzeuginnenraum zu erlangen. So ist also gemäß einer Alternative vorgesehen, dass der Zugriff zu einem späteren Zeitpunkt durchgeführt werden soll. Gemäß einer anderen Alternative ist vorgesehen, dass das Fahrzeug zu einer Zielposition fährt, an welcher der Zugriff durchführbar ist.

Eine solche Zielposition ist zum Beispiel nach einer Ausführungsform eine Abgabeposition, die einem Parkplatz zugeordnet oder von einem Parkplatz umfasst ist. An einer solchen Abgabeposition gibt ein Fahrer des Fahrzeugs sein Fahrzeug ab, damit es beginnend ab dieser Abgabeposition einen autonomen Parkvorgang durchführt.

Eine Zielposition kann beispielsweise verschieden von einer solchen Abgabeposition sein und kann zum Beispiel eine Position innerhalb des Parkplatzes sein, welche besonders geeignet ist, um einen Zugriff auf den Fahrzeuginnenraum durchzuführen, ohne hierbei einen Fahrzeugverkehr auf dem Parkplatz zu stören.

In einer anderen Ausführungsform ist vorgesehen, dass der Zugriffwunsch eine Zeitdauer umfasst, die angibt, wie lange der Zugriff notwendig ist, und/oder wobei der Zugriffswunsch eine Information umfasst, welche Fahrzeugscheibe und/oder welche Fahrzeugtüre für den Zugriff geöffnet werden soll, wobei dasjenige Ausparkmanöver der drei Ausparkmanöver, das das Fahrzeug durchführen soll, abhängig von der Zeitdauer und/oder abhängig von der Information ausgewählt wird.

Dadurch wird insbesondere der technische Vorteil bewirkt, dass effizient und effektiv ermittelt oder entschieden werden kann, welches der Ausparkmanöver durchgeführt werden soll. Denn wenn zum Beispiel ein Zugriff auf das Fahrzeug nur für einen kurzen Zeitraum von beispielsweise zwei Minuten notwendig ist, so kann das Fahrzeug vollständig aus der Parkposition herausgefahren werden. Dies im Vergleich zu dem Fall, wenn ein Zugriff für eine längere Zeitdauer von beispielsweise fünf Minuten gewünscht ist. Sofern zum Beispiel eine Kofferraumtür oder Kofferraumklappe geöffnet werden soll, so muss hierfür in der Regel das Fahrzeug vollständig aus der Parkposition herausgefahren werden.

In einer anderen Ausführungsform ist vorgesehen, dass ein Startsignal zum Starten des Verlassens der Parkposition erst dann über das Kommunikationsnetzwerk an das Fahrzeug gesendet wird, wenn im Umfeld des Fahrzeugs ein Absender des Zugriffswunschs erfasst wird und/oder wenn ein Absender des Zugriffswunschs gemeldet hat, dass er sich im Umfeld des Fahrzeugs befindet. Dadurch wird insbesondere der technische Vorteil bewirkt, dass das Verlassen der Parkposition nicht zu früh durchgeführt wird, also zu einem Zeitpunkt, an welchem noch gar keine Person am Fahrzeug ist, die den Zugriff durchführen könnte. Somit kann also in vorteilhafter Weise verhindert werden, dass ein Fahrzeugverkehr im Umfeld der Parkposition unnötig gestört wird.

Nach einer Ausführungsform ist vorgesehen, dass der Absender ein Fahrer des Fahrzeugs ist.

Nach einer Ausführungsform ist vorgesehen, dass das Erfassen mittels eines Überwachungssystems durchgeführt wird.

Ein Überwachungssystem umfasst nach einer Ausführungsform einen oder mehrere der folgenden Umfeldsensoren: Videosensor, Radarsensor, Ultraschallsensor, Lidarsensor, Lasersensor. Insbesondere umfasst das Überwachungssystem nach einer Ausführungsform eine oder mehrere Lichtschranken und/oder einen oder mehrere Türöffnungssensoren.

Das Melden des Absenders des Zugriffswunschs, dass er sich im Umfeld des Fahrzeugs befindet, kann insbesondere wie folgt durchgeführt werden. Der Absender sendet beispielsweise über das Kommunikationsnetzwerk eine entsprechende Nachricht. Das heißt also insbesondere, dass dann eine entsprechende Nachricht über das Kommunikationsnetzwerk empfangen wird.

Gemäß einer anderen Ausführungsform ist die Vorrichtung zum Erzeugen einer Zugriffsmöglichkeit auf einen Fahrzeuginnenraum eines auf einer Parkposition abgestellten Fahrzeugs eingerichtet oder ausgebildet, das Verfahren zum Erzeugen einer Zugriffsmöglichkeit auf einen Fahrzeuginnenraum eines auf einer Parkposition abgestellten Fahrzeugs aus- oder durchzuführen.

Vorrichtungsmerkmale ergeben sich analog aus entsprechenden Verfahrensmerkmalen. Das heißt also insbesondere, dass sich technische Funktionalitäten betreffend die Vorrichtung aus entsprechenden Funktionalitäten des Verfahrens und umgekehrt ergeben. Das heißt also insbesondere, dass die Kommunikationsschnittstelle entsprechend zum Empfangen und/oder zum Senden von entsprechenden Daten ausgebildet ist. Insbesondere heißt das beispielsweise, dass der Prozessor entsprechend ausgebildet ist, Daten zu ermitteln oder eines der Ausparkmanöver auszuwählen.

Die Erfindung wird im Folgenden anhand von bevorzugten Ausführungsbeispielen näher erläutert. Hierbei zeigen
Fig. 1 ein erstes Ausparkmanöver,
Fig. 2 ein zweites Ausparkmanöver,
Fig. 3 ein Stören eines Verkehrs aufgrund des zweiten Ausparkmanövers gemäß Fig. 2,
Fig. 4 ein drittes Ausparkmanöver,
Fig. 5 ein Ablaufdiagramm eines Verfahrens zum Erzeugen einer Zugriffsmöglichkeit auf einen Fahrzeuginnenraum eines auf einer Parkposition abgestellten Fahrzeugs,
Fig. 6 eine Vorrichtung zum Erzeugen einer Zugriffsmöglichkeit auf einen Fahrzeuginnenraum eines auf einer Parkposition abgestellten Fahrzeugs,
Fig. 7 ein Parksystem für Fahrzeuge und
Fig. 8 ein auf einer Parkposition abgestelltes Fahrzeug.

Im Folgenden können für gleiche Merkmale gleiche Bezugszeichen verwendet werden.

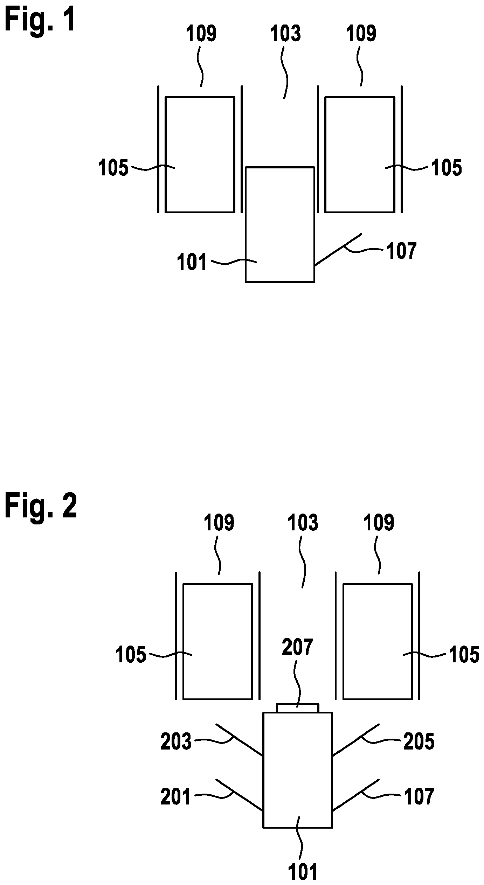

Fig. 1 zeigt ein erstes Ausparkmanöver.

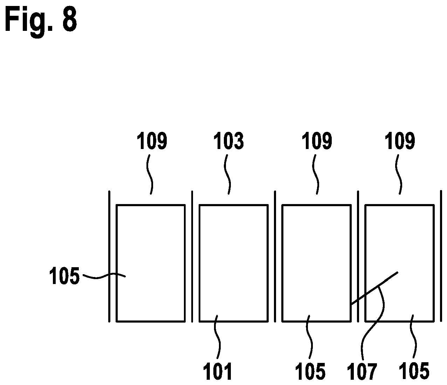

Hierbei parkt ein Fahrzeug 101 aus seiner Parkposition 103 aus. Links und rechts neben dem Fahrzeug 101 ist jeweils ein weiteres Fahrzeug 105 geparkt. Die Parkpositionen der weiteren Fahrzeuge 105 sind mit dem Bezugszeichen 109 gekennzeichnet. Wenn das Fahrzeug 101 vollständig auf seiner Parkposition steht, so ist ein Öffnen einer Fahrzeugtür 107 nicht möglich, ohne die weiteren Fahrzeuge 105 zu treffen (vgl. auch Fig. 8). Das heißt also, dass, wenn das Fahrzeug 101 vollständig auf seiner Parkposition 103 steht, ein Öffnen einer Fahrzeugtür 107 nicht möglich ist. Somit ist also ein Zugriff auf einen Fahrzeuginnenraum des Fahrzeugs 101 nicht möglich. Dies zeigt anschaulich die Fig. 8.

Fig. 8 zeigt symbolisch, wie das Fahrzeug 103 komplett in seiner Parkposition 103 abgestellt ist. Links und rechts neben dem Fahrzeug 103 sind die weiteren Fahrzeuge 105 geparkt. Ein Öffnen der Fahrzeugtür 107, um Zugriff auf den Fahrzeuginnenraum zu erlangen, ist aufgrund des engen Abstands nicht möglich. Die Fahrzeugtür 107 ist zwecks Verdeutlichung dennoch in einem geöffneten Zustand gezeichnet, um zu illustrieren, dass diese mit dem weiteren Fahrzeug 105 kollidieren würde. Real könnte die Fahrzeugtür 107 natürlich nicht so weit geöffnet werden, wie es die Fig. 8 zeigt.

Ein Ausparkmanöver, wie es im Sinne der vorliegenden Erfindung verwendet werden kann, umfasst insbesondere, dass das Fahrzeug 101 seine Parkposition 103 teilweise verlässt. Dies zeigt symbolisch die Fig. 1. Das Fahrzeug 101 steht also teilweise noch auf der Parkposition 103. Teilweise steht das Fahrzeug 101 außerhalb der Parkposition 103. Es verlässt die Parkposition 103 so weit, dass zumindest eine Fahrzeugtür 107 geöffnet werden kann. In Fig. 1 ist dies eine Fahrertür, die in einem geöffneten Zustand dargestellt ist. In einer nicht gezeigten Ausführungsform kann zusätzlich oder anstelle zu der Fahrertür 107 auch eine Beifahrertür, die hier nicht explizit gezeigt ist, geöffnet werden. Nun kann aufgrund der geöffneten Fahrertür 107 ein Zugriff auf einen Fahrzeuginnenraum des Fahrzeugs 101 durchgeführt werden.

Nach Ende des Zugriffs ist in vorteilhafter Weise nach einer Ausführungsform vorgesehen, dass das Fahrzeug zurück in die Parkposition 103 fährt, sodass das Fahrzeug anschließend wieder vollständig auf der Parkposition 103 abgestellt ist.

Fig. 2 zeigt ein zweites Ausparkmanöver.

Gemäß diesem zweiten Ausparkmanöver verlässt das Fahrzeug 101 vollständig seine Parkposition 103.

Dadurch, dass das Fahrzeug 101 seine Parkposition vollständig verlassen hat, also komplett ausgeparkt ist, können alle vier Fahrzeugtüren, die Beifahrertür 201 und zwei Fahrzeugtüren 203, 205 für die hinteren Fahrzeuginsassen sowie eine Heckklappe oder Kofferraumklappe oder Kofferraumtür 207 geöffnet werden, um hierüber Zugriff auf einen Fahrzeuginnenraum des Fahrzeugs zu erlangen.

Das heißt also, dass ein Zugriff über alle Fahrzeugtüren 107, 201, 203, 205 und der Kofferraumklappe 207 geschaffen ist.

Analog zum ersten Ausparkmanöver gemäß Fig. 1 ist auch hier nach einer Ausführungsform vorgesehen, dass nach einem Ende des Zugriffs, also insbesondere dann, wenn der Zugriff nicht mehr benötigt wird, das Fahrzeug 101 zurück in seine Parkposition 103 fährt.

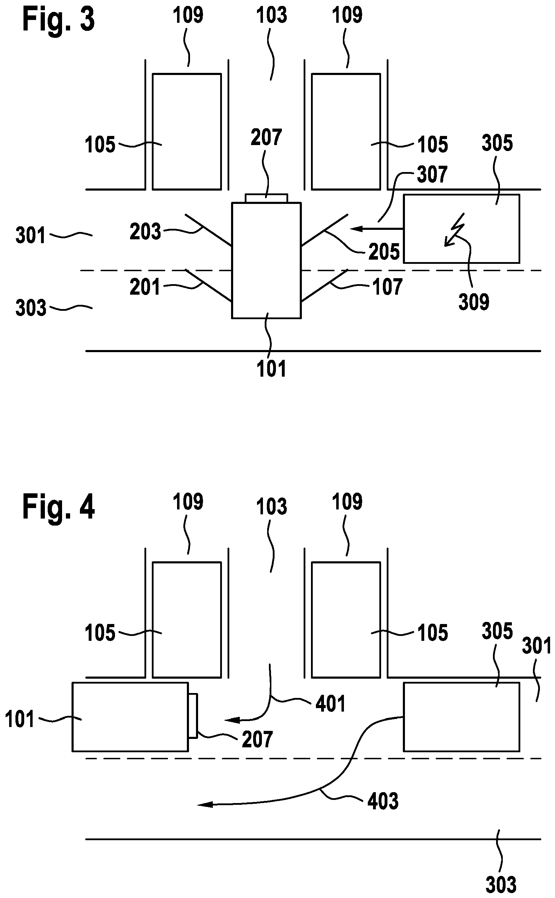

Fig. 3 zeigt ein Szenario, welches symbolisch illustrieren soll, dass es aufgrund des Ausparkmanövers gemäß Fig. 2 zu einer Störung in einem Verkehr kommen kann.

Wie die Fig. 3 zeigt, ist also das Fahrzeug 101 vollständig ausgeparkt. Es hat also vollständig seine Parkposition 103 verlassen. Dadurch ist aber das Fahrzeug auf zwei Fahrspuren 301, 303 gelangt. Das heißt, dass das Fahrzeug 101 quer zu den beiden Fahrspuren 301 und 303 steht. Ein weiteres Fahrzeug 305 wird bei seiner Fahrt auf der Fahrspur 301 durch das Fahrzeug 101 gestört. Eine Fahrtrichtung des Fahrzeugs 305 ist mit einem Pfeil mit dem Bezugszeichen 307 gekennzeichnet. Für das weitere Fahrzeug 305 stellt das Fahrzeug 101 ein Hindernis dar. Das heißt also, dass das weitere Fahrzeug 305 zum Beispiel anhalten muss, damit es nicht zu einer Kollision mit dem Fahrzeug 101 kommt. Somit wird also ein Verkehrsfluss behindert oder gestoppt.

Dass das Fahrzeug 101 in seiner ausgeparkten Position das weitere Fahrzeug 305 stört, ist symbolisch mit einem gezackten Pfeil in Blitzform mit dem Bezugszeichen 309 dargestellt.

Fig. 4 zeigt ein drittes Ausparkmanöver, welches eine Störung im Verkehr gemäß Fig. 3 vermindern oder sogar verhindern kann.

Hier hat das Fahrzeug 101 seine Parkposition 103 ebenfalls komplett verlassen, steht aber nicht mehr quer zu den beiden Fahrspuren 301 und 303, sondern längs in der Fahrspur 301 und somit längs zur Fahrspur 303. Das Fahrzeug fuhr also aus seiner Parkposition 103 nach rechts bezogen auf seine Ausparkrichtung heraus, was hier symbolisch mit einem Pfeil mit dem Bezugszeichen 401 dargestellt ist.

Aufgrund dieses Ausparkmanövers bleibt eine Fahrspur, die Fahrspur 303, frei für einen Verkehr. Dadurch kann in vorteilhafter Weise das weitere Fahrzeug 305 seitlich am Fahrzeug 101 vorbeifahren. Eine hierfür mögliche Trajektorie für das weitere Fahrzeug 305 ist symbolisch mit einem Pfeil mit dem Bezugszeichen 403 gekennzeichnet. Das heißt also, dass das dritte Ausparkmanöver in vorteilhafter Weise verhindern kann, dass ein Verkehrsfluss gestört wird, zumindest wird eine mögliche Störung oder Behinderung minimiert.

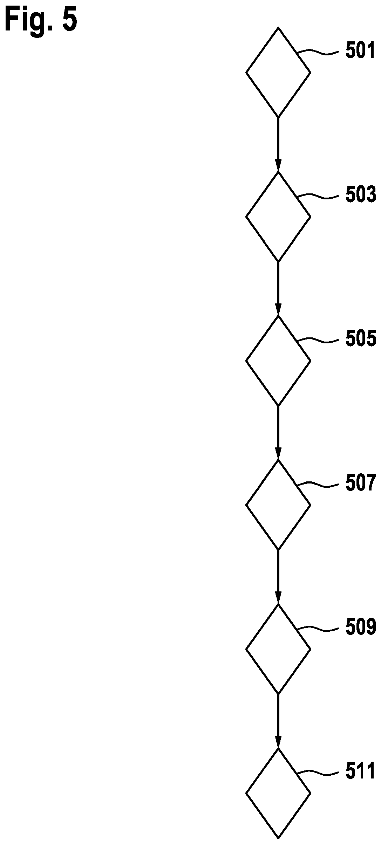

Fig. 5 zeigt ein Ablaufdiagramm eines Verfahrens zum Erzeugen einer Zugriffsmöglichkeit auf einen Fahrzeuginnenraum eines auf einer Parkposition abgestellten Fahrzeugs.

Das Verfahren umfasst die folgenden Schritte:
- Empfangen 501 eines Zugriffswunschs für einen Zugriff auf den Fahrzeuginnenraum über ein Kommunikationsnetzwerk,
- ansprechend auf den empfangenen Zugriffswunsch Ermitteln 503 von Ausparkdaten, basierend auf welchen das Fahrzeug zumindest teilweise seine Parkposition verlassen kann, um eine Zugriffsmöglichkeit auf den Fahrzeuginnenraum mittels eines Öffnens einer Fahrzeugscheibe und/oder einer Fahrzeugtür zu schaffen,
- Senden 505 der ermittelten Ausparkdaten an das Fahrzeug über das Kommunikationsnetzwerk,
- Empfangen 507 eines Signals über das Kommunikationsnetzwerk, dass die Zugriffsmöglichkeit nicht länger benötigt wird,
- ansprechend auf das Signal Ermitteln 509 von Einparkdaten, basierend auf welchen das Fahrzeug zurück in seine Parkposition fahren kann, und
- Senden 511 der ermittelten Einparkdaten an das Fahrzeug über das Kommunikationsnetzwerk.

Die Ausparkdaten umfassen zum Beispiel solche Daten, basierend auf welchen das Fahrzeug eines der im Zusammenhang mit den Fig. 1 bis 4 beschriebenen Ausparkmanövern durchführen kann.

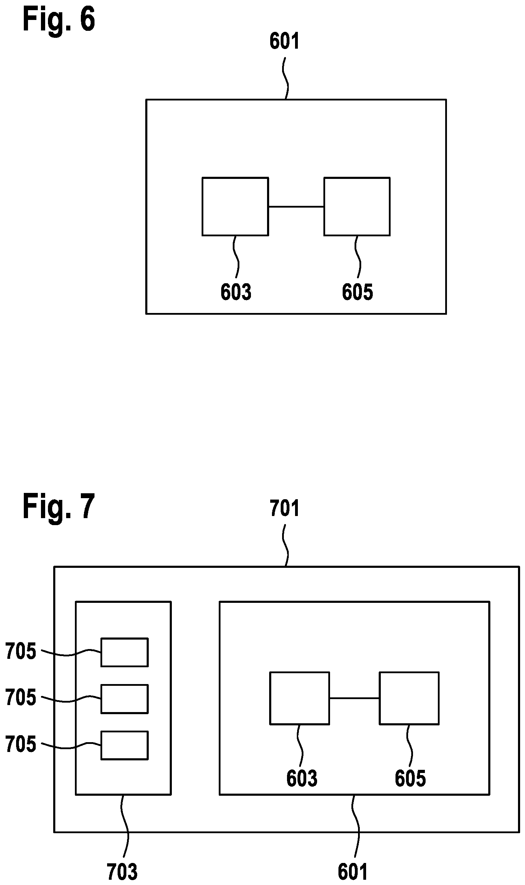

Fig. 6 zeigt eine Vorrichtung 601 zum Erzeugen einer Zugriffsmöglichkeit auf einen Fahrzeuginnenraum eines auf einer Parkposition abgestellten Fahrzeugs.

Die Vorrichtung 601 umfasst:
- eine Kommunikationsschnittstelle 603 zum Empfangen eines Zugriffswunschs für einen Zugriff auf den Fahrzeuginnenraum über ein Kommunikationsnetzwerk,
- einen Prozessor 605 zum Ermitteln von Ausparkdaten ansprechend auf den empfangenen Zugriffswunsch, basierend auf welchen das Fahrzeug zumindest teilweise seine Parkposition verlassen kann, um eine Zugriffsmöglichkeit auf den Fahrzeuginnenraum mittels eines Öffnens einer Fahrzeugscheibe und/oder einer Fahrzeugtür zu schaffen,
- wobei die Kommunikationsschnittstelle 603 ausgebildet ist, die ermittelten Ausparkdaten an das Fahrzeug über das Kommunikationsnetzwerk zu senden,
- wobei die Kommunikationsschnittstelle 603 ausgebildet ist, ein Signal über das Kommunikationsnetzwerk zu empfangen, dass die Zugriffsmöglichkeit nicht länger benötigt wird,
- wobei der Prozessor 605 ausgebildet ist, ansprechend auf das empfangene Signal, Einparkdaten zu ermitteln, basierend auf welchen das Fahrzeug zurück in seine Parkposition fahren kann, und
- wobei die Kommunikationsschnittstelle 603 ausgebildet ist, die ermittelten Einparkdaten an das Fahrzeug über das Kommunikationsnetzwerk zu senden.

Fig. 7 zeigt ein Parksystem 701 für Fahrzeuge.

Das Parksystem 701 umfasst einen Parkplatz 703, der mehrere Parkpositionen 705 aufweist. Gezeigt sind gemäß Fig. 7 drei Parkpositionen. In nicht gezeigten Ausführungsformen sind mehr oder weniger als drei Parkpositionen 705 vorgesehen.

Das Parksystem 701 umfasst ferner die Vorrichtung 601 der Fig. 6.

Die Erfindung umfasst also insbesondere und unter anderem den Gedanken, ein effizientes Konzept bereitzustellen, basierend auf welchem ein kurzfristiger oder temporärer Zugriff oder Zugang für eine Person, zum Beispiel den Fahrer, zum Fahrzeug an seiner Parkposition ermöglicht ist. Ein erfindungsgemäßer Gedanke ist insbesondere darin zu sehen, dass das Fahrzeug automatisch oder autonom oder ferngesteuert aus der Parkposition herausfährt. Dies nach einer Ausführungsform nur so weit, dass ein Zugang oder ein Zugriff (beide Begriffe können synonym verwendet werden) möglich ist. Dies insbesondere dadurch, dass zumindest eine Fahrzeugtür und/oder eine Fahrzeugscheibe geöffnet wird.

Das Fahrzeug fährt nach einer Ausführungsform nur dann aus der Parkposition heraus, wenn der restliche Verkehr, also ein Verkehr im Umfeld der Parkposition, hierdurch nicht gestört wird.

Fig. 1 zeigt hier symbolisch ein minimales Ausparken, um einen Zugang oder einen Zugriff über eine Tür, in Fig. 1 exemplarisch die Fahrertür 107, zu ermöglichen.

Fig. 2 zeigt hier symbolisch ein minimales Ausparken, um einen Zugang oder Zugriff über sämtliche Fahrzeugtüren und den Kofferraum zu ermöglichen.

Fig. 3 zeigt hier symbolisch, dass durch das temporäre Ausparken gemäß Fig. 2 der restliche Verkehr gestört werden kann.

Fig. 4 zeigt eine mögliche Lösung des in Fig. 3 dargestellten Problems. Hier wird das Fahrzeug so ausgeparkt, dass der restliche Verkehr nicht gestört wird und/oder an dem Ausparkvorgang, also insbesondere an dem ausgeparkten Fahrzeug, vorbeifahren kann.

Nach einer Ausführungsform ist vorgesehen, dass der Vorgang des Ausparkens durch ein Parkhausverwaltungssystem koordiniert wird. Ein solches Parkhausverwaltungssystem umfasst zum Beispiel die erfindungsgemäße Vorrichtung. In der Regel koordiniert und/oder regelt ein solches Parkhausmanagementsystem nach einer Ausführungsform auch einen AVP-Verkehr auf einem Parkplatz. Allgemein kann anstelle des Parkhausverwaltungssystems ein Parkplatzverwaltungssystem vorgesehen sein.

Nach einer Ausführungsform ist vorgesehen, dass ein Fahrer oder ein Mitfahrer oder eine andere Person, also allgemein eine Person, beim Parkplatzverwaltungssystem, also allgemein bei der Vorrichtung, einen Zugriffswunsch zum Fahrzeug, das an einer Parkposition abgestellt ist, anmeldet. Das heißt also, dass die Person über ein Kommunikationsnetzwerk diesen Zugang oder Zugriff anmeldet und somit zum Beispiel eine entsprechende Nachricht, also einen Zugriffswunsch über das Kommunikationsnetzwerk sendet. Dies kann zum Beispiel mittels eines mobilen Endgeräts, zum Beispiel mittels eines Smartphones, und/oder eines Terminals, zum Beispiel eines Parkhausterminals, am Parkplatz selbst durchgeführt werden.

Das heißt also, dass die erfindungsgemäße Vorrichtung über ihre Kommunikationsschnittstelle einen solchen Zugriffswunsch empfängt.

Nach einer Ausführungsform umfasst der Zugriffswunsch eine zeitliche Angabe, wie lange der Zugang oder der Zugriff notwendig ist. Das heißt also, dass der Zugriffswunsch eine Zeitdauer umfasst, die angibt, wie lange der Zugriff notwendig ist.

Nach einer Ausführungsform umfasst der Zugriffswunsch eine Information darüber, welcher Art der Zugang ist, also welcher Zugang benötigt wird. Das heißt also, welche Fahrzeugtür und/oder welche Fahrzeugscheibe oder ob die Kofferraumklappe geöffnet werden soll.

Nach einer Ausführungsform wird aufgrund der vorstehend genannten Informationen (zum Beispiel die Zeitdauer und die Information, welche Fahrzeugscheibe und/oder welche Fahrzeugtür für den Zugriff geöffnet werden soll) entschieden oder ermittelt, ob ein solcher Zugriff überhaupt möglich ist. Bei dieser Entscheidung wird insbesondere eine momentane und/oder prädizierte Verkehrslage im Umfeld der Parkposition und insbesondere auf dem Parkplatz selbst berücksichtigt.

Sofern ein Zugriff zu der gewünschten Zeit oder momentan nicht möglich ist, so ist nach einer Ausführungsform vorgesehen, dass dies der Person, die den Zugriffswunsch gesendet hat, also dem Absender des Zugriffswunschs, zum Beispiel dem Fahrer, mitgeteilt wird.

Nach einer Ausführungsform werden folgende Alternativen vorgeschlagen: Eine erste Alternative umfasst, dass eine Nachricht an den Absender des Zugriffswunschs gesendet wird, dass der Zugriffswunsch zu einem späteren Zeitpunkt noch einmal gesendet werden soll oder dass die Zugriffsmöglichkeit erst zu einem späteren Zeitpunkt geschaffen werden kann.

Eine Alternative umfasst, dass das Fahrzeug zu einer Abgabeposition oder Abgabestelle fährt und nach einem Ende des Zugangs oder Zugriffs zurück zur Parkposition fährt.

Eine Alternative umfasst, dass das Fahrzeug zu einer separaten Zugangsstelle fährt und nach Ende des Zugangs zurück zur Parkposition fährt.

Allgemein umfasst eine Alternative, dass das Fahrzeug zu einer Zielposition fährt, an welcher der Zugriff durchführbar ist.

Nach einer Ausführungsform ist vorgesehen, dass dem Absender des Zugriffswunschs die Position der Parkposition über das Kommunikationsnetzwerk gesendet wird. Zum Beispiel wird dem Fahrer die Position des Fahrzeugs, also die Parkposition, über das Kommunikationsnetzwerk mitgeteilt. Zum Beispiel wird dem Absender des Zugriffswunschs eine Route zum Fahrzeug über das Kommunikationsnetzwerk gesendet. Zum Beispiel wird dem Absender des Zugriffswunschs eine digitale Karte über das Kommunikationsnetzwerk bereitgestellt.

Der Absender des Zugriffswunschs, zum Beispiel der Fahrer, geht zum Fahrzeug. Nach einer Ausführungsform ist vorgesehen, dass dieser Vorgang mittels eines Parkplatzüberwachungssystems erkannt oder erfasst wird. Nach einer Ausführungsform ist vorgesehen, dass der Absender, zum Beispiel der Fahrer, es der Vorrichtung meldet, dass er am Fahrzeug ist. Dies kann er zum Beispiel über ein mobiles Endgerät, zum Beispiel über ein Smartphone, durchführen.

Nach einer Ausführungsform ist vorgesehen, dass die Vorrichtung ermittelt, wie der Ausparkvorgang durchzuführen ist. Dies beispielsweise gemäß einem der vorstehend genannten Ausparkmanöver. Also einem:
teilweisen Herausfahren, zum Beispiel nur so weit, dass der Zugang über eine Tür möglich ist, oder
zum Beispiel ein Gesamt-Herausfahren oder
ein Gesamtherausfahren und Parken auf der Fahrspur.

Das Ermitteln, welcher Ausparkvorgang durchgeführt wird, wird nach einer Ausführungsform erst dann durchgeführt, wenn der Fahrer oder allgemein der Absender des Zugriffswunschs am Fahrzeug ist.

Nach einer Ausführungsform ist vorgesehen, dass der Ausparkvorgang auf Freigabe der Vorrichtung oder allgemein des Parkplatzmanagementsystems gestartet respektive freigegeben wird.

Das Fahrzeug parkt dann aus. Hierbei kann der Ausparkvorgang durch die Vorrichtung ferngesteuert werden oder das Fahrzeug parkt basierend auf fahrzeugeigenen Systemen aus, also autonom. Im letzteren Fall ist nach einer Ausführungsform vorgesehen, dass die hierfür notwendigen Daten von der Vorrichtung, also allgemein vom Parkplatzmanagementsystem, an das Fahrzeug gesendet werden.

Nachdem der Zugang oder Zugriff beendet ist und der Absender des Zugriffswunschs, zum Beispiel der Fahrer, dies der Vorrichtung mitgeteilt oder gesendet hat oder bestätigt hat, parkt das Fahrzeug wieder ein. Dies zum Beispiel analog zum Ausparken, also zum Beispiel autonom oder ferngesteuert.

Nach einer Ausführungsform kann vorgesehen sein, dass nur ein Gesamtausparken mit Halten auf der Fahrspur vorgesehen oder möglich ist. Dies zum Beispiel dann, wenn das Fahrzeug nur in der Lage ist, ein solches Ausparkmanöver durchzuführen.

Nach einer Ausführungsform wird der Vorgang, insbesondere der Auspark- und/oder der Einparkvorgang und/oder der Zugriff, durch das Parkplatzüberwachungssystem überwacht.

Die Erfindung stellt also ein effizientes Konzept bereit, mittels welchem ein temporärer Zugang oder Zugriff auf das Fahrzeug ermöglicht ist. Dies insbesondere dadurch, dass ein auf einer Parkposition abgestelltes Fahrzeug soweit herausgefahren wird, dass ein Zugriff auf den Fahrzeuginnenraum geschaffen ist, indem eine oder mehrere Fahrzeugtüren und/oder eine oder mehrere Fahrzeugscheiben geöffnet werden. Das Fahrzeug kann zum Beispiel vollständig oder teilweise herausgefahren werden. Allgemein kann eine Fahrzeugtür zum Beispiel eine Kofferraumklappe oder Kofferraumtür sein.

Dadurch wird in vorteilhafter Weise der technische Vorteil bewirkt, dass im Rahmen eines AVP-Vorgangs die AVP-Fahrzeuge so eng nebeneinander geparkt werden können, dass üblicherweise ein Zugang oder ein Zugriff auf den Fahrzeuginnenraum über die Türen und/oder den Kofferraum nicht mehr möglich ist, so dass ein vorhandener Parkraum oder eine vorhandene Parkfläche effizient genutzt werden kann. Denn für den Fall, dass ein temporärer Zugang oder ein temporärer Zugriff notwendig ist, kann das Fahrzeug gemäß einem der vorstehend genannten Ausparkmanöver temporär, also kurzfristig, also für eine vorbestimmte Zeitdauer, ausgeparkt werden. Nach Ende des Zugriffs fährt das Fahrzeug zurück in seine Parkposition. Dadurch kann zum Beispiel ein wichtiges Medikament aus dem Fahrzeug geholt werden.

## Patentansprüche

1. Verfahren zum Erzeugen einer Zugriffsmöglichkeit auf einen Fahrzeuginnenraum eines auf einer Parkposition (103) abgestellten Fahrzeugs (101), umfassend die folgenden Schritte:
- Empfangen (501) eines Zugriffswunschs für einen Zugriff auf den Fahrzeuginnenraum über ein Kommunikationsnetzwerk,
- ansprechend auf den empfangenen Zugriffswunsch Ermitteln (503) von Ausparkdaten, basierend auf welchen das Fahrzeug (101) zumindest teilweise seine Parkposition (103) verlassen kann, um eine Zugriffsmöglichkeit auf den Fahrzeuginnenraum mittels eines Öffnens einer Fahrzeugscheibe und/oder einer Fahrzeugtür (107, 201, 203, 205) zu schaffen,
- Senden (505) der ermittelten Ausparkdaten an das Fahrzeug (101) über das Kommunikationsnetzwerk,
- Empfangen (507) eines Signals über das Kommunikationsnetzwerk, dass die Zugriffsmöglichkeit nicht länger benötigt wird,
- ansprechend auf das Signal Ermitteln (509) von Einparkdaten, basierend auf welchen das Fahrzeug (101) zurück in seine Parkposition (103) fahren kann, und
- Senden (511) der ermittelten Einparkdaten an das Fahrzeug (101) über das Kommunikationsnetzwerk.

2. Verfahren nach Anspruch 1, wobei die Ausparkdaten und/oder die Einparkdaten einen oder mehrere Fernsteuerungsbefehle umfassen, basierend auf welchen das Fahrzeug (101) ferngesteuert aus- und/oder eingeparkt wird.

3. Verfahren nach einem der vorherigen Ansprüche, wobei die Ausparkdaten und/oder die Einparkdaten solche Daten umfassen, basierend auf welchen das Fahrzeug (101) autonom aus und/oder einparken kann.

4. Verfahren nach einem der vorherigen Ansprüche, wobei ansprechend auf den empfangenen Zugriffswunsch Positionsdaten der Parkposition (103) über das Kommunikationsnetzwerk gesendet werden.

5. Verfahren nach einem der vorherigen Ansprüche, wobei die Ausparkdaten solche Daten umfassen, dass das Fahrzeug (101) eines der folgenden Ausparkmanöver durchführen kann: Teilweises Herausfahren aus der Parkposition (103) mit anschließendem Abstellen, Vollständiges Herausfahren aus der Parkposition (103) mit anschließendem Abstellen, Vollständiges Herausfahren mit anschließendem Abstellen längs zu oder in einer Fahrspur (301, 303).

6. Verfahren nach Anspruch 5, wobei basierend auf einer momentanen und/oder prädizierten Verkehrslage im Umfeld der Parkposition (103) ermittelt wird, ob zumindest eines der Ausparkmanöver durchführbar ist, wobei, wenn keines der Ausparkmanöver durchführbar ist, eine der folgenden Aktionen durchgeführt wird:
- Senden einer Nachricht an einen Absender des Zugriffswunschs, dass der Zugriffswunsch zu einem späteren Zeitpunkt noch einmal gesendet werden soll oder dass die Zugriffsmöglichkeit erst zu einem späteren Zeitpunkt geschaffen werden kann, oder
- Senden von Daten an das Fahrzeug (101) über das Kommunikationsnetzwerk, basierend auf welchen das Fahrzeug (101) zu einer Zielposition fahren kann, an welcher der Zugriff durchführbar ist.

7. Verfahren nach Anspruch 5 oder 6, wobei der Zugriffwunsch eine Zeitdauer umfasst, die angibt, wie lange der Zugriff notwendig ist, und/oder wobei der Zugriffswunsch eine Information umfasst, welche Fahrzeugscheibe und/oder welche Fahrzeugtüre (107, 201, 203, 205) für den Zugriff geöffnet werden soll, wobei dasjenige Ausparkmanöver der drei Ausparkmanöver, das das Fahrzeug (101) durchführen soll, abhängig von der Zeitdauer und/oder abhängig von der Information ausgewählt wird.

8. Verfahren nach einem der vorherigen Ansprüche, wobei ein Startsignal zum Starten des Verlassens der Parkposition (103) erst dann über das Kommunikationsnetzwerk an das Fahrzeug (101) gesendet wird, wenn im Umfeld des Fahrzeugs (101) ein Absender des Zugriffswunschs erfasst wird und/oder wenn ein Absender des Zugriffswunschs gemeldet hat, dass er sich im Umfeld des Fahrzeugs (101) befindet.

9. Vorrichtung (601) zum Erzeugen einer Zugriffsmöglichkeit auf einen Fahrzeuginnenraum eines auf einer Parkposition (103) abgestellten Fahrzeugs (101), umfassend:
- eine Kommunikationsschnittstelle (603) zum Empfangen eines Zugriffswunschs für einen Zugriff auf den Fahrzeuginnenraum über ein Kommunikationsnetzwerk,
- einen Prozessor (605) zum Ermitteln von Ausparkdaten ansprechend auf den empfangenen Zugriffswunsch, basierend auf welchen das Fahrzeug (101) zumindest teilweise seine Parkposition (103) verlassen kann, um eine Zugriffsmöglichkeit auf den Fahrzeuginnenraum mittels eines Öffnens einer Fahrzeugscheibe und/oder einer Fahrzeugtür (107, 201, 203, 205) zu schaffen,
- wobei die Kommunikationsschnittstelle (603) ausgebildet ist, die ermittelten Ausparkdaten an das Fahrzeug (101) über das Kommunikationsnetzwerk zu senden,
- wobei die Kommunikationsschnittstelle (603) ausgebildet ist, ein Signal über das Kommunikationsnetzwerk zu empfangen, dass die Zugriffsmöglichkeit nicht länger benötigt wird,
- wobei der Prozessor (605) ausgebildet ist, ansprechend auf das empfangene Signal, Einparkdaten zu ermitteln, basierend auf welchen das Fahrzeug (101) zurück in seine Parkposition (103) fahren kann, und
- wobei die Kommunikationsschnittstelle (603) ausgebildet ist, die ermittelten Einparkdaten an das Fahrzeug (101) über das Kommunikationsnetzwerk zu senden.

10. Parksystem (701) für Fahrzeuge, umfassend einen mehrere Parkpositionen (705) aufweisenden Parkplatz (703) und die Vorrichtung (601) nach Anspruch 9.

11. Computerprogramm, umfassend Programmcode zur Durchführung des Verfahrens nach einem der Ansprüche 1 bis 8, wenn das Computerprogramm auf einem Computer ausgeführt wird.

## Claims

1. Method for creating a possibility for accessing a vehicle interior of a vehicle (101) parked at a parking position (103), comprising the following steps of:
- receiving (501) a request to access the vehicle interior via a communication network,
- in response to the received access request, determining (503) parking space exit data, on the basis of which the vehicle (101) can at least partially leave its parking position (103) in order to create a possibility for accessing the vehicle interior by opening a vehicle window and/or a vehicle door (107, 201, 203, 205),
- transmitting (505) the determined parking space exit data to the vehicle (101) via the communication network,
- receiving (507) a signal indicating that the access possibility is no longer required via the communication network,
- in response to the signal, determining (509) parking space entry data, on the basis of which the vehicle (101) can drive back into its parking position (103), and
- transmitting (511) the determined parking space entry data to the vehicle (101) via the communication network.

2. Method according to Claim 1, wherein the parking space exit data and/or the parking space entry data comprise one or more remote control instructions, on the basis of which the vehicle (101) is driven out of and/or into the parking space in a remotely controlled manner.

3. Method according to one of the preceding claims, wherein the parking space exit data and/or the parking space entry data comprise such data, on the basis of which the vehicle (101) can autonomously exit and/or enter the parking space.

4. Method according to one of the preceding claims, wherein position data relating to the parking position (103) are transmitted via the communication network in response to the received access request.

5. Method according to one of the preceding claims, wherein the parking space exit data comprise such data that the vehicle (101) can carry out one of the following parking space exit manoeuvres: partial driving out of the parking position (103) with subsequent parking, complete driving out of the parking position (103) with subsequent parking, complete driving out with subsequent parking alongside or in a lane (301, 303).

6. Method according to Claim 5, wherein, on the basis of a current and/or predicted traffic situation in the environment of the parking position (103), it is determined whether at least one of the parking space exit manoeuvres can be carried out, wherein one of the following actions is carried out if none of the parking space exit manoeuvres can be carried out:
- transmitting a message to a sender of the access request indicating that the access request should be transmitted again at a later time or that the access possibility can be created only at a later time, or
- transmitting data to the vehicle (101) via the communication network, on the basis of which data the vehicle (101) can drive to a target position at which access can be carried out.

7. Method according to Claim 5 or 6, wherein the access request comprises a period which indicates the length of time for which access is required, and/or wherein the access request comprises an item of information relating to which vehicle window and/or which vehicle door (107, 201, 203, 205) should be opened for access, wherein that parking space exit manoeuvre of the three parking space exit manoeuvres which is intended to be carried out by the vehicle (101) is selected on the basis of the period and/or on the basis of the information.

8. Method according to one of the preceding claims, wherein a starting signal for starting the process of leaving the parking position (103) is transmitted to the vehicle (101) via the communication network only when a sender of the access request is captured in the environment of the vehicle (101) and/or when a sender of the access request has signalled that he is in the environment of the vehicle (101).

9. Apparatus (601) for creating a possibility for accessing a vehicle interior of a vehicle (101) parked at a parking position (103), comprising:
- a communication interface (603) for receiving a request to access the vehicle interior via a communication network,
- a processor (605) for determining parking space exit data in response to the received access request, on the basis of which data the vehicle (101) can at least partially leave its parking position (103) in order to create a possibility for accessing the vehicle interior by opening a vehicle window and/or a vehicle door (107, 201, 203, 205),
- wherein the communication interface (603) is designed to transmit the determined parking space exit data to the vehicle (101) via the communication network,
- wherein the communication interface (603) is designed to receive a signal indicating that the access possibility is no longer required via the communication network,
- wherein the processor (605) is designed to determine parking space entry data in response to the received signal, on the basis of which data the vehicle (101) can drive back into its parking position (103), and
- wherein the communication interface (603) is designed to transmit the determined parking space entry data to the vehicle (101) via the communication network.

10. Parking system (701) for vehicles, comprising a parking area (703) having a plurality of parking positions (705) and the apparatus (601) according to Claim 9.

11. Computer program comprising program code for carrying out the method according to one of Claims 1 to 8 when the computer program is executed on a computer.

## Revendications

1. Procédé de génération d'une possibilité d'accès à un habitacle d'un véhicule (101) stationné à une position de stationnement (103), le procédé comprenant les étapes suivantes :
- recevoir (501) par le biais d'un réseau de communication une demande d'accès à l'habitacle du véhicule,
- déterminer (503), en réponse à la demande d'accès reçue, des données de sortie d'une place de stationnement à partir desquelles le véhicule (101) peut quitter au moins partiellement sa position de stationnement (103) pour générer une possibilité d'accès à l'habitacle du véhicule par ouverture d'une vitre de véhicule et/ou d'une porte de véhicule (107, 201, 203, 205),
- envoyer (505) des données de sortie d'une place de stationnement déterminées au véhicule (101) par le bais du réseau de communication,
- recevoir (507) par le biais du réseau de communication un signal indiquant que la possibilité d'accès n'est plus nécessaire,
- déterminer (509), en réponse au signal, des données de reprise d'une place de stationnement à partir desquelles le véhicule (101) peut revenir à sa position de stationnement (103), et
- envoyer (511) des données de reprise d'une place de stationnement déterminées au véhicule (101) par le biais du réseau de communication.

2. Procédé selon la revendication 1, dans lequel les données de sortie d'une place de stationnement et/ou les données de reprise d'une place de stationnement comprennent au moins une instruction de commande à distance à partir de laquelle le véhicule (101) peut quitter et/ou reprendre une place de stationnement de manière télécommandée.

3. Procédé selon l'une des revendications précédentes, dans lequel les données de sortie d'une place de stationnement et/ou les données de reprise d'une place de stationnement comprennent de telles données à partir desquelles le véhicule (101) peut quitter et/ou reprendre une place de stationnement de manière autonome.

4. Procédé selon l'une des revendications précédentes, dans lequel, en réponse à la demande d'accès reçue, des données relatives à la position de stationnement (103) sont envoyées par le biais du réseau de communication.

5. Procédé selon l'une des revendications précédentes, dans lequel les données de sortie d'une place de stationnement comprennent des données selon lesquelles le véhicule (101) peut effectuer l'une des manoeuvres suivantes de sortie d'une place de stationnement : sortie partielle de la position de stationnement (103) suivie d'une reprise de stationnement, sortie complète de la position de stationnement (103) suivie d'une reprise de stationnement, sortie complète suivie d'une reprise de stationnement dans une voie de roulement (301, 303) ou le long de celle-ci.

6. Procédé selon la revendication 5, dans lequel on détermine sur la base d'une situation de trafic actuelle et/ou prévue à proximité de la position de stationnement (103) si au moins une des manoeuvres de sortie d'une place de stationnement est réalisable ; si aucune des manoeuvres de sortie d'une place de stationnement n'est réalisable, l'une des actions suivantes est effectuée :
- envoyer à un expéditeur de la demande d'accès un message indiquant que la demande d'accès doit être envoyée encore une fois ultérieurement ou que la possibilité d'accès peut être générée ultérieurement, ou
- envoyer au véhicule (101), par le biais du réseau de communication, des données à partir desquelles le véhicule (101) peut se rendre à une position de destination où l'accès est possible.

7. Procédé selon la revendication 5 ou 6, dans lequel la demande d'accès comprend une durée indiquant combien de temps l'accès est nécessaire et/ou dans lequel la demande d'accès comprend une information relative à la vitre de véhicule et/ou à la porte de véhicule (107, 201, 203, 205) qui peut être ouverte pour permettre l'accès, celle des trois manoeuvres de sortie d'une place de stationnement que le véhicule (101) doit effectuer étant choisie en fonction de la durée et/ou en fonction de l'information.

8. Procédé selon l'une des revendications précédentes, dans lequel un signal de départ ordonnant de quitter la position de stationnement (103) n'est envoyé au véhicule (101) par le biais du réseau de communication que lorsqu'un expéditeur de la demande d'accès est détecté à proximité du véhicule (101) et/ou lorsqu'un expéditeur de la demande d'accès a indiqué qu'il se trouvait à proximité du véhicule (101).

9. Dispositif (601) de génération d'une possibilité d'accès à l'habitacle d'un véhicule (101) stationné à une position de stationnement (103), comprenant :
- une interface de communication (603) destinée à recevoir une demande d'accès à l'habitacle du véhicule par le biais d'un réseau de communication,
- un processeur (605) destiné à déterminer, en réponse à la demande d'accès reçue, des données de sortie d'une place de stationnement, à partir desquelles le véhicule (101) peut au moins partiellement quitter sa position de stationnement (103) pour permettre l'accès à l'habitacle du véhicule par ouverture d'une vitre de véhicule et/ou d'une porte de véhicule (107, 201, 203, 205),
- l'interface de communication (603) étant conçue pour envoyer les données de sortie d'une place de stationnement déterminées au véhicule (101) par le bais du réseau de communication,
- l'interface de communication (603) étant conçue pour recevoir par le biais du réseau de communication un signal indiquant que la possibilité d'accès n'est plus nécessaire,
- le processeur (605) étant adapté pour déterminer, en réponse au signal reçu, des données de reprise d'une place de stationnement à partir desquelles le véhicule (101) peut retourner dans sa position de stationnement (103), et
- l'interface de communication (603) étant conçue pour envoyer les données de reprise d'une place de stationnement déterminées au véhicule (101) par le biais du réseau de communication.

10. Système de stationnement (701), destiné à des véhicules, comprenant un parking (703) comportant une pluralité de positions de stationnement (705) et le dispositif (601) selon la revendication 9.

11. Logiciel comportant un code de programme destiné à mettre en oeuvre le procédé selon l'une des revendications 1 à 8, lorsque le logiciel est exécuté sur un ordinateur.
